# FASCICULE DE BREVET EUROPEEN

(11) **EP 2 299 128 B1**
(45) Date de publication et mention de la délivrance du brevet: **23.05.2012**
(21) Numéro de dépôt: 10176442.1
(22) Date de dépôt: 13.09.2010
(51) Int. Cl.: F16B 5/06, E04H 15/64

(54) **Système de liaison d'un sous-ensemble, notamment d'un panneau souple, à un élément allongé**
Verbindungselement einer Untereinheit, insbesondere eines flexiblen Paneels mit einem länglichen Element
System for linking a sub-assembly, in particular a flexible panel, to an elongate element

(30) Priorité: 18.09.2009 FR 0956442
(43) Date de publication de la demande: 23.03.2011
(73) Titulaire: LP TENT Sarl, 38070 Saint-Quentin-Fallavier (FR)
(72) Inventeur: Robba, Carlo, 69720 St Laurent de Mure (FR)
(74) Mandataire: Jeannet, Olivier

(56) Documents cités:
- WO-A1-92/19873
- DE-A1- 4 026 604
- FR-A1- 2 370 880

## Description

La présente invention concerne un système de liaison d'un sous-ensemble, notamment d'un panneau souple, à un élément allongé, ledit sous-ensemble comprenant un bord destiné à être relié audit élément allongé, ce bord comprenant une partie épaisse propre à être engagée dans une gorge que comprend l'élément allongé, et cette gorge de l'élément allongé étant propre à retenir cette partie épaisse c'est-à-dire s'ouvrant sur l'extérieur, le long de l'élément allongé, par une fente ayant une largeur inférieure à la largeur du reste de la gorge.

L'invention est en particulier utilisable pour relier un panneau souple constituant une paroi ou une cloison d'un abri provisoire tel qu'une tente ou un stand, à un poteau ou une traverse faisant partie de l'armature de cet abri.

Il est nécessaire dans certaines applications de relier un panneau souple à un élément allongé à gorges. Tel est en particulier le cas dans le domaine des abris provisoires tels que les tentes ou les stands, dans lequel des panneaux souples constituant les parois ou les cloisons de l'abri doivent être reliés aux profilés à gorges constituant l'armature de cet abri.

Sur des tentes, cette liaison est classiquement réalisée au moyen d'un jonc cousu à un bord du panneau, formant ladite partie épaisse, qui est engagé par coulissement dans la gorge de l'élément allongé, à partir soit de l'une des extrémités de l'élément allongé, soit à partir d'une ou plusieurs parties d'entrée usinées dans l'élément allongé.

Ce type d'assemblage par coulissement a pour inconvénients d'être relativement long et difficile à mettre en oeuvre, et de nécessiter généralement la présence de plusieurs opérateurs pour faire coulisser le jonc sur la longueur de l'élément allongé.

En outre, lorsqu'il s'agit d'abris provisoires utilisés pour des manifestations temporaires, des expositions, des spectacles, des réceptions ou similaires, les opérations de montage et démontage peuvent se répéter plusieurs fois en peu de temps, et être ainsi particulièrement fastidieuses pour les opérateurs.

Le document No. WO 92/19873 décrit un système de liaison tel que précité, dans lequel ladite partie épaisse présente une forme circulaire et est apte à être engagée dans ladite gorge au travers de ladite fente, et dans lequel au moins une pièce de maintien permet de maintenir cette partie épaisse dans cette gorge.

Le système selon ce document s'avère toutefois ne pas être adapté à une application à des tentes ou des abris provisoires exposées aux intempéries, et notamment au vent, devant être montés et démontés rapidement. En effet, la liaison prévue n'est pas de nature à résister aux contraintes répétées transmises par le vent à une telle liaison dans le cas de tels tentes ou abris provisoires, compte tenu du jeu que peut avoir la partie épaisse dans la gorge. Ce jeu est de plus sans doute générateur d'une usure importante sur la toile du panneau relié à l'élément à gorge. En outre, la libération de cette liaison apparaît particulièrement difficile avec ce système.

Il en est de même des systèmes de liaison décrits par les documents FR 2 370 880 et DE 40 26 604.

La présente invention vise à remédier aux inconvénients des systèmes selon la technique antérieure, en fournissant un système permettant de relier un sous-ensemble à un élément allongé de manière fiable, sans risque de coincement et sans usure importante, permettant d'obtenir une liaison résistante du sous-ensemble à l'élément allongé, à même de parfaitement résister aux contraintes répétées exercées par ce sous-ensemble sur cet élément allongé, et permettant de réaliser rapidement et facilement cette liaison et de la supprimer tout aussi rapidement.

Dans le système concerné, de manière connue en soi, le bord du sous-ensemble destiné à être relié à l'élément allongé comprend une partie épaisse propre à être engagée dans une gorge que comprend l'élément allongé, cette gorge de l'élément allongé étant propre à retenir cette partie épaisse c'est-à-dire s'ouvrant sur l'extérieur, le long de l'élément allongé, par une fente ayant une largeur inférieure à la largeur du reste de la gorge ; le système comprend au moins une pièce de maintien incluant une portion terminale épaisse apte à être engagée en force dans la gorge au travers de ladite fente et à maintenir ladite partie épaisse dans ladite gorge.

Selon l'invention :
- ladite gorge comprend un logement latéral, décalé latéralement par rapport à ladite fente ;
- ladite partie épaisse est formée par au moins un organe d'accrochage dont une portion terminale forme un crochet faisant saillie latéralement, ayant une forme ajustée à celle dudit logement latéral ; cette portion terminale est apte à être engagée dans la gorge au travers de ladite fente puis à être amenée, par déplacement transversal, dans ledit logement latéral, ladite portion terminale portant alors contre une portion de l'élément allongé qui délimite la fente et étant ainsi retenue dans ce logement ;

- ladite portion terminale épaisse de ladite pièce de maintien est dimensionnée de manière à occuper la partie restante de ladite gorge ;
- la ou les pièces de maintien comprennent chacune un organe de traction sous forme d'une languette, dimensionné de manière a faire saillie en dehors de la gorge dudit élément allongé lorsque ladite pièce de maintien est engagée dans ladite gorge.

Ainsi, avec le système de liaison selon l'invention, ladite partie terminale de ladite partie épaisse est immobilisée dans un logement latéral de la gorge, qui lui est ajusté, et ladite pièce de maintien permet de maintenir cette partie terminale en engagement dans ce logement latéral tout en pouvant être facilement et rapidement extraite de la gorge grâce à la languette de traction qu'elle comprend. Le maintien de la pièce de maintien dans la gorge est réalisé par l'engagement en force de cette pièce de maintien dans cette gorge. Par ailleurs, l'organe de traction que comprennent la ou les pièces de maintien permet de faciliter le retrait de cette ou ces pièces hors de la gorge.

La ou lesdites pièces de maintien peuvent être indépendantes dudit sous ensemble ; de préférence, toutefois, cette ou ces pièces de maintien sont reliées audit sous-ensemble, notamment à proximité dudit bord. Elles sont ainsi aisément manipulables et ne risquent pas d'être égarées.

Notamment, dans ce cas, la ou les pièces de maintien peuvent être reliées, en dehors de leur portion terminale épaisse, à une bande souple, elle-même reliée au sous-ensemble.

Ladite portion terminale épaisse de la ou desdites pièces de maintien est avantageusement en un matériau élastiquement déformable, lui permettant d'être comprimée pour son insertion au travers de ladite fente puis de s'expandre par rappel élastique une fois engagée dans ladite partie restante de la gorge, assurant de ce fait le maintien de la ou desdites pièces de maintien dans cette partie restante et le maintien du ou des organes d'accrochage en position d'accrochage.

Le bord du sous-ensemble pourrait comprendre une pluralité d'organes d'accrochage placés de proche en proche le long de lui ; de préférence toutefois, le bord du sous-ensemble comprend un organe d'accrochage unique, sous forme d'un profilé, s'étendant sur toute la longueur de ce bord ou sur une majeure partie de ce bord.

De la même façon, le système pourrait comprendre une pluralité de pièces de maintien ; de préférence toutefois, le système comprend une pièce de maintien unique, sous forme d'un profilé, dont la longueur est telle qu'elle est propre à s'étendre, en position d'insertion dans la gorge, sur toute la longueur dudit bord ou sur une majeure partie de ce bord.

Selon une forme de réalisation préférée de l'invention :
- chaque organe d'accrochage présente une forme en L dont l'une des branches constitue ladite portion terminale formant un crochet ;
- la portion terminale épaisse de chaque pièce de maintien est sous forme d'un jonc, c'est-à-dire d'un renflement cylindrique.

L'invention sera bien comprise, et d'autres caractéristiques et avantages de celle-ci apparaîtront, en référence au dessin schématique annexé, ce dessin représentant, à titre d'exemple non limitatif, une forme de réalisation préférée du système qu'elle concerne.
La figure 1 en est une vue d'ensemble en perspective, dans une position de liaison d'un panneau souple à un élément allongé ;
la figure 2 en est une vue de dessus, dans une position dans laquelle le panneau souple n'est pas relié à l'élément allongé ;
la figure 3 est une vue similaire à la figure 2, après engagement d'un organe d'accrochage que comprend le panneau souple dans une gorge que comprend l'élément allongé ;
la figure 4 est une vue similaire à la figure 3, au cours de l'engagement d'une pièce de maintien de l'organe d'accrochage dans la gorge, et
la figure 5 en est une vue similaire à la figure 4 après l'engagement de la pièce de maintien dans la gorge.

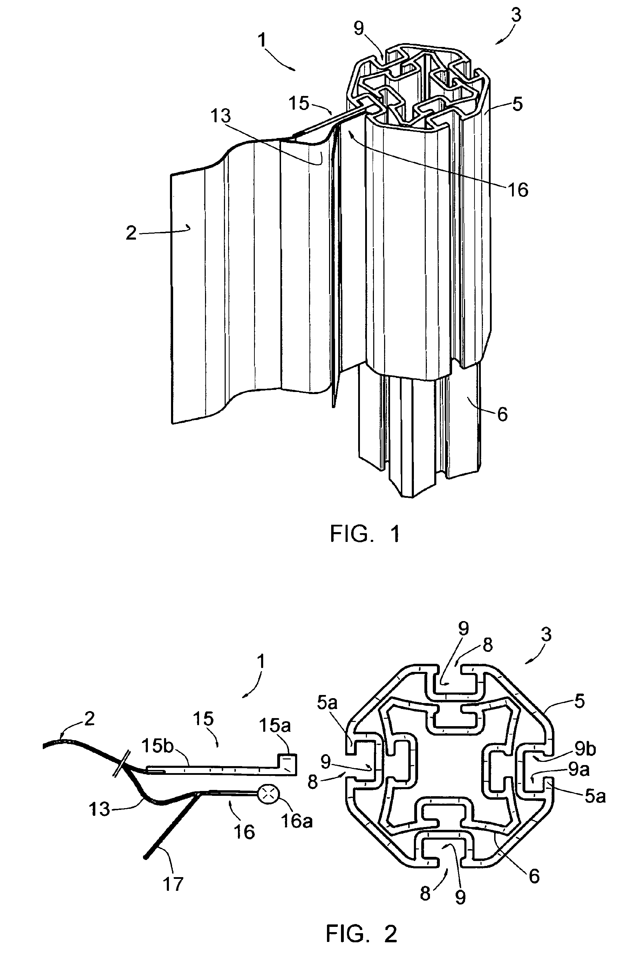

La figure 1 représente un système 1 de liaison d'un panneau souple 2 constituant une paroi ou une cloison d'un abri provisoire tel qu'une tente, à un poteau 3 faisant partie de l'armature de cet abri.

Le poteau 3 présente une structure télescopique, comprenant un élément supérieur 5 de plus forte section et un élément inférieur 6 de plus faible section, apte à coulisser à l'intérieur de l'élément 5. L'élément inférieur 6 est relié à une embase d'appui au sol (non représentée).

En référence plus particulièrement aux figures 2 à 5, il apparaît que chaque élément 5 comprend quatre gorges 9 disposées à 90 degrés les unes des autres, chaque gorge 9 étant rétentive, c'est-à-dire débouchant sur l'extérieur de l'élément 5 par une fente 8 de largeur inférieure à la largeur de la gorge 9. Comme cela est visible sur la figure 2, chaque gorge 9 comprend une première partie 9a située derrière un rebord saillant 5a de l'élément 5 délimitant la fente 8, qui forme par conséquent un logement décalé latéralement par rapport à la fente 8, et une partie restante 9b située sensiblement en face de la fente 8.

Le bord du panneau 2 destiné à être relié à l'élément 5 comprend un organe d'accrochage 15 et une pièce de maintien 16.

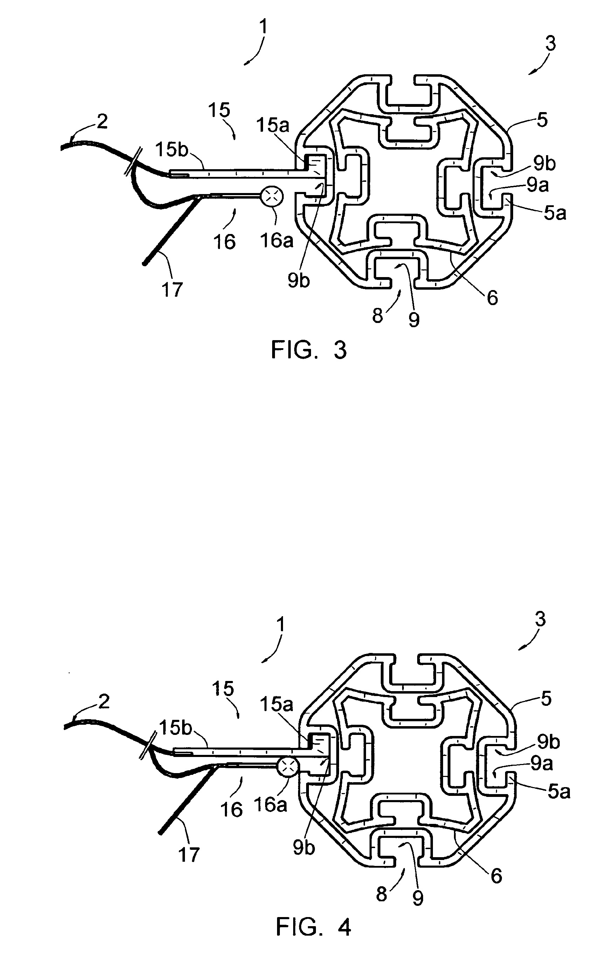

L'organe d'accrochage 15 est formé par un profilé s'étendant sur toute la longueur dudit bord du panneau 2. Il présente une forme en L, comprenant une branche terminale 15a saillante latéralement, formant un crochet, et une branche de base 15b reliée au panneau 2. La branche 15a présente une largeur inférieure à celle de chaque fente 8, de sorte qu'elle peut être engagée au travers de celle-ci (figure 2), et une épaisseur telle qu'elle peut, une fois engagée dans la gorge 9, être déplacée transversalement jusqu'à une position d'accrochage dans laquelle elle prend place de manière ajustée dans ledit logement latéral formé par ladite première partie 9a de la gorge 9 (figure 3).

La pièce de maintien 16 est également formée par un profilé s'étendant sur toute la longueur dudit bord du panneau 2. Elle est en un matériau élastiquement déformable, notamment un élastomère. Cette pièce 16 présente une portion terminale épaisse sous forme d'un renflement cylindrique 16a et une portion plane de base 16b, reliée à une bande souple 13 elle-même reliée au panneau 2 et à une languette de traction 17.

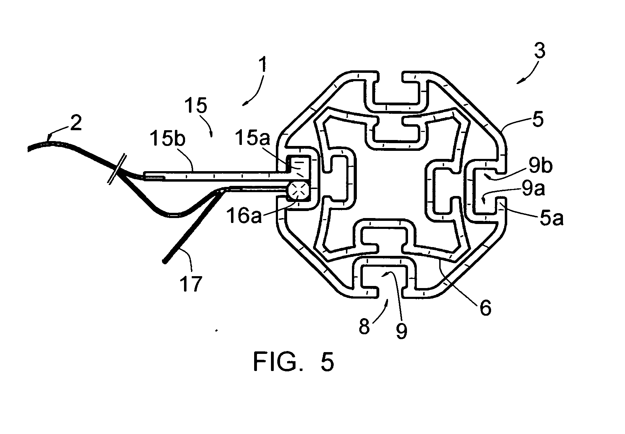

Le renflement cylindrique 16a est destiné à être comprimé de manière à pouvoir être engagé en force au travers de la fente 8 (figure 4), jusqu'à pénétrer dans ladite partie restante 9b de la gorge 9 et pouvoir s'expandre dans celle-ci par rappel élastique de son matériau constitutif (figure 5). Dans cette position, la pièce de maintien 16 assure le maintien de l'organe d'accrochage 15 dans ladite position d'accrochage.

En pratique, lorsqu'il s'agit d'assembler le panneau 2 à l'élément 5, la branche terminale 15a est engagée au travers de la fente 8 puis l'organe de verrouillage 15 est déplacé transversalement jusqu'à ladite position d'accrochage (cf. figure 3). Le renflement cylindrique 16a de la pièce de maintien 16 est alors engagé en force au travers de la fente 8 (cf. figure 4) jusqu'à prendre place dans ladite partie restante 9b, dans laquelle il est retenu par rappel élastique (cf. figure 5).

L'utilisateur, lorsqu'il désire séparer le panneau 2 et l'élément 5, opère une traction sur la languette 17 afin d'extraire en force le renflement 16a de la pièce de maintien 16 hors de la gorge 9 et de le faire passer au travers de la fente 8.

Comme cela apparaît de ce qui précède, l'invention fournit un système pour la constitution d'un abri provisoire, notamment d'une tente, ayant les avantages déterminants de permettre de réaliser l'assemblage du panneau souple 2 à des poteaux 3 de manière particulièrement simple, rapide, et pouvant être réalisé par un opérateur unique.

L'invention a été décrite ci-dessus en référence à une forme de réalisation donnée à titre d'exemple. Il va de soi qu'elle n'est pas limitée à cette forme de réalisation mais qu'elle s'étend à toutes les formes de réalisations couvertes par les revendications ci-annexées.

## Revendications

1. Système (1) de liaison d'un sous-ensemble (2), notamment d'un panneau souple, à un élément allongé (3), ledit sous-ensemble (2) comprenant un bord destiné à être relié audit élément allongé (3), ce bord comprenant une partie épaisse (15a) propre à être engagée dans une gorge (9) que comprend l'élément allongé (3), cette gorge (9) de l'élément allongé (3) étant propre à retenir cette partie épaisse (15a) c'est-à-dire s'ouvrant sur l'extérieur, le long de l'élément allongé (3), par une fente (8) ayant une largeur inférieure à la largeur du reste de la gorge (9) ; le système comprend au moins une pièce de maintien (16) incluant une portion terminale épaisse (16a) apte à être engagée en force dans la gorge (9) au travers de ladite fente (8) et à maintenir ladite partie épaisse (15a) dans ladite gorge ;
**caractérisé en ce que** :
- ladite gorge (9) comprend un logement latéral (9a), décalé latéralement par rapport à ladite fente (8) ;
- ladite partie épaisse est formée par au moins un organe d'accrochage (15) dont une portion terminale (15a) forme un crochet faisant saillie latéralement, ayant une forme ajustée à celle dudit logement latéral (9a) ; cette portion terminale (15a) est apte à être engagée dans la gorge (9) au travers de ladite fente (8) puis à être amenée, par déplacement transversal, dans ledit logement latéral (9a), ladite portion terminale (15a) portant alors contre une portion (5a) de l'élément allongé qui délimite la fente (8) et étant ainsi retenue dans ce logement (9a) ;
- ladite portion terminale épaisse (16a) de ladite pièce de maintien (16) est dimensionnée de manière à occuper la partie restante (9b) de ladite gorge (9) ;
- la ou les pièces de maintien (16) comprennent chacune un organe de traction sous forme d'une languette (17), dimensionné de manière a faire saillie en dehors de la gorge (9) dudit élément allongé (3) lorsque ladite pièce de maintien (16) est engagée dans ladite gorge (9).

2. Système de liaison (1) selon la revendication 1, **caractérisé en ce que** la ou lesdites pièces de maintien (16) sont reliées audit sous-ensemble (2), notamment à proximité dudit bord.

3. Système de liaison (1) selon la revendication 2, **caractérisé en ce que** la ou les pièces de maintien (16) sont reliées, en dehors de leur portion terminale épaisse (16a), à une bande souple, elle-même reliée au sous-ensemble (2).

4. Système de liaison (1) selon l'une des revendications 1 à 3, **caractérisé en ce que** ladite portion terminale épaisse (16a) de la ou desdites pièces de maintien (16) est en un matériau élastiquement déformable, lui permettant d'être comprimée pour son insertion au travers de ladite fente (8) puis de s'expandre par rappel élastique une fois engagée dans ladite partie restante de la gorge (9), assurant de ce fait le maintien de la ou desdites pièces de maintien (16) dans cette partie restante et le maintien du ou des organes d'accrochage en position d'accrochage.

5. Système de liaison (1) selon l'une des revendications 1 à 4, **caractérisé en ce que** le bord du sous-ensemble (2) comprend un organe d'accrochage (15) unique, sous forme d'un profilé, s'étendant sur toute la longueur de ce bord ou sur une majeure partie de ce bord.

6. Système de liaison (1) selon l'une des revendications 1 à 5, **caractérisé en ce qu'**il comprend une pièce de maintien (16) unique, sous forme d'un profilé, dont la longueur est telle qu'elle est propre à s'étendre, en position d'insertion dans la gorge (9), sur toute la longueur dudit bord ou sur une majeure partie de ce bord.

7. Système de liaison (1) selon l'une des revendications 1 à 6, **caractérisé en ce que** :
- chaque organe d'accrochage (15) présente une forme en L dont l'une des branches constitue ladite portion terminale formant un crochet (15a) ;
- la portion terminale épaisse (16a) de chaque pièce de maintien (16) est sous forme d'un jonc, c'est-à-dire d'un renflement cylindrique.

## Claims

1. System (1) for linking a sub-assembly (2), in particular a flexible panel, to an elongate element (3), said sub-assembly (2) comprising an edge intended to be for linked to said elongated element (3), said edge comprising a thick portion (15a) adapted to be engaged in a groove (9) that the elongate element (3) comprises, this groove (9) of the elongate element (3) being capable of retaining this thick portion (15a) that is to say, opening on the outside, along the elongate element (3), by a slot (8) having a width less than the width of the rest of the groove (9); the system comprises at least one holding part (16) including a thick end portion (16a) adapted to be forced engaged in the groove (9) through said slot (8) and to maintain said thick portion (15a) in said groove;
**characterized in that**
- said groove (9) comprises a lateral housing (9a), offset laterally with respect to said slot (8);
- said thick portion is formed by at least one fastening element (15), of which one end portion (15a) forms a hook projecting laterally, having a shape adapted to that of said lateral housing (9a); this end portion (15a) is adapted to be engaged in the groove (9) through said slot (8) and then to be brought, by transverse displacement in said lateral housing (9a), said end portion (15a) then bearing against a portion (5a) of the elongate element which delimits the slot (8) and thus being retained in said housing (9a);
- said thick end portion (16a) of said holding part (16) is dimensioned so as to occupy the remaining portion (9b) of said groove (9);
- the holding part(s) (16) each comprise a traction element in the form of a tab (17), dimensioned so as to project outside the groove (9) of said elongate element (3) when said holding part (16) is engaged in said groove (9).

2. System (1) for linking according to claim 1, **characterized in that** the holding part(s) (16) is(are) linked to said sub-assembly (2), especially near said edge.

3. System (1) for linking according to claim 2, **characterized in that** the holding part(s) (16) is(are) linked, outside its(their) thick end portion (16a), to a flexible strip, itself linked to the sub-assembly (2).

4. System (1) for linking according to anyone of claims 1 to 3, **characterized in that** said thick end portion (16a) or the said holding part(s) (16) is made in an elastically deformable material, allowing it to be compressed for insertion through said slot (8) and then to expand by elastic return once engaged in said remaining portion of the groove (9), thereby ensuring the maintenance of said holding part(s) (16) in said remaining portion and the maintenance of the attachment element(s) in the linked position.

5. System (1) for linking according to anyone of claims 1 to 4, **characterized in that** the edge of the sub-assembly (2) comprises a single fastening element (15), in the form of a profile, extending over the entire length of this edge or over a major portion of this edge.

6. System (1) for linking according to anyone of claims 1 to 5, **characterized in that** it comprises a single holding part (16), in the form of a profile, whose length is such that it is capable to extend, in the insertion position in the groove (9), over the entire length of said edge or over a major portion of this edge.

7. System (1) for linking according to anyone of claims 1 to 6, **characterized in that**
- each fastening element (15) has an L-shape of which one of the branches forms said end portion forming a hook (15a);
- the thick end portion (16a) of each holding part (16) is in the form of a rod, that is to say, of a cylindrical bulge.

## Patentansprüche

1. Verbindungselement (1) einer Untereinheit (2), insbesondere eines flexiblen Paneels, mit einem länglichen Element (3) verbunden ist, wobei die Untereinheit (2) mit einem Kante für die Verbindung mit dem länglichen Element (3) ist, wobei die Kante mit einem dicken Abschnitt (15a), die in einer Nut (9) die das längliche Element (3), wobei diese Nut (9) des länglichen Elements (3) in der Lage beibehalten aufweist Eingriff gebracht werden Diese dicken Abschnitt (15a), das heißt, die Öffnung an der Außenseite entlang des länglichen Elements (3), einen Schlitz (8) eine geringere Breite als die Breite der Rest der Nut (9), weist das element mindestens ein Halteteil (16) mit einem dicken Ende (16a), die durch Kraft in der Nut (9) durch Eingriff des Schlitzes (8) und Halten der dicke Abschnitt (15a) in der Nut;
**dadurch gekennzeichnet, dass**
- die Nut (9) eine seitliche Gehäuse (9a), seitlich in Bezug auf den Schlitz (8) versetzt ist;
- diese dicken Abschnitt von mindestens einem Befestigungselement (15) ausgebildet ist mit einem Ende (15a) einen Haken bildet, die seitlich, mit einer Form zu der der seitliche Sitz (9a) ausgebildet ist; dieser Endabschnitt (15a) angepasst ist, um in der Nut (9) durch den Schlitz (8) und dann gebracht wird, durch Querverschiebung in dem Gehäuse werden Seite (9a), in Eingriff gebracht werden Endabschnitt (15a), dann Anlage an einem Abschnitt (5a) des länglichen Elements, der den Schlitz (8) begrenzt und somit in dem Gehäuse gehalten (9a);
- diese dicken Ende (16a) des Halteteils (16) so dimensioniert ist, den verbleibenden Teil (9b) der Nut (9) besetzen;
- oder die Haltestücke (16) jeweils einen Antrieb in der Form einer Zunge (17), die so dimensioniert ist, um Projekt außerhalb der Nut (9) des langgestreckten Elements (3), wenn der Teil Beibehalten (16) in Eingriff steht Nut (9).

2. Verbindungselement (1) nach Anspruch 1, **dadurch gekennzeichnet daß** die oder die Halteteile (16) daß die Untereinheit (2) verbunden sind, insbesondere in der Nähe der Kante.

3. Verbindungselement (1) nach Anspruch 2 **dadurch gekennzeichnet daß** das oder die Haltestücke (16), außerhalb ihres dicken Ende (16a), ein flexibles Band, verbunden sind sich das angeschlossene Untereinheit (2).

4. Verbindungselement (1) nach einem der Ansprüche 1 bis 3, **dadurch** dicken Ende (16a) oder die Halteteile (16) einen elastisch verformbaren Material aufweist, so dass sie zum Einführen durch komprimiert werden dem Schlitz (8) und dann durch elastische Rückstellung wieder in dem verbleibenden Abschnitt der Nut (9), wodurch die Wartung oder die Halteteile (16) in Eingriff Expander in dem verbleibenden Teil und zum Halten der Befestigungselemente oder in der verriegelten Position.

5. Verbindungselement (1) nach einem der Ansprüche 1 bis 4, **dadurch gekennzeichnet, dass** der Rand der Untereinheit (2) ein Befestigungselement (15) nur in Form eines Profils, sich über die gesamte Länge dieser Kante oder über einen größeren Teil dieser Kante.

6. Verbindungselement (1) nach einem der Ansprüche 1 bis 5, **dadurch gekennzeichnet, daß** sie ein Halteteil (16) nur in der Form eines Profils, dessen Länge so bemessen ist, dass es **dadurch** eigenen zu verlängern, in der Einsetzposition in die Nut (9), über die gesamte Länge der Kante oder über einen größeren Teil dieser Kante.

7. Verbindungselement (1) nach einem der Ansprüche 1 bis 6, **dadurch gekennzeichnet, dass**
- Jedes Befestigungselement (15) eine L-Form, die einen der Zweige der Endabschnitt aufweist, der eine Sperrklinke (15a);
- Das dicke Ende (16a) jedes Halteteil (16) in Form eines Stabes, das heißt, eine zylindrische Ausbuchtung.
